# EUROPEAN PATENT APPLICATION

(11) **EP 4 596 321 A1**
(43) Date of publication of application: **06.08.2025**
(21) Application number: 24223683.4
(22) Date of filing: 30.12.2024
(51) Int. Cl.: B60P 1/48, B60P 1/64, B66F 9/06

(54) **LOAD HANDLING CONTROLLER, METHOD AND COMPUTER PROGRAM PRODUCT**

(71) Applicant: Hiab AB, 215 32 Malmö (SE)
(72) Inventor: Raza, Minahil, 00940 Helsinki (FI); Piililä, Reima, 33720 Tampere (FI); Mäenpää, Pekka, 33720 Tampere (FI); Aref, Mohammad, 33610 Tampere (FI); Vihonen, Juho, 33100 Tampere (FI); Garagipati, Bharath, 33720 Tampere (FI)
(74) Representative: Papula Oy

(57) **Abstract**

Disclosed is a load handling controller, a method and a computer program product. A first virtual marker corresponding to a load of the vehicle and one or more commands for positioning the first virtual marker within a representation of the surrounding of a load handling vehicle is provided. From the position of the first virtual marker in the representation, a wanted position for unloading the load relative to the representation of the surrounding of the vehicle is determined. Based on the wanted position for unloading the load relative to the representation of the surrounding of the vehicle, control instructions for the vehicle for load handling are provided.

## Description

### FIELD

The present invention relates to controlling a vehicle with load handling equipment, such as a vehicle with a hook lift, a skiploader or the like.

### BACKGROUND

As industries increasingly rely on automation and advanced machinery, having improved means for controlling load-handling vehicles has become essential. This is especially true in scenarios involving autonomous operation, where precision, safety, and efficiency are paramount.

### SUMMARY

An objective is to provide improved means for controlling a vehicle with load handling equipment, in particular for improving human-machine interaction. This may be used for different degrees of autonomous operation of the vehicle.

According to a first aspect a load handling controller for a vehicle with load handling equipment (herein also "the controller") is provided. The load handling controller is arranged to receive sensor input from a system of sensors at the vehicle for monitoring and mapping the surrounding of the vehicle. The system of sensors may comprise at least an image sensor unit and/or a distance mapping sensor unit. The controller is also arranged to generate, based on the sensor input, a representation of the surrounding of the vehicle. The representation may comprise one or more images and/or point cloud maps of the surrounding of the vehicle together with a set of virtual markers for the one or more images and/or point cloud maps of the surrounding of the vehicle to facilitate load handling. This allows human-machine interaction for specific aspects of the load handling.

The controller is further arranged to provide the representation of the surrounding of the vehicle for visual illustration to an operator of the load handling controller on one or more human-machine interface devices. The controller is also arranged to collect user commands for the load handling from the one or more human-machine interface devices. The user commands may belong to a set of commands available to the operator of the load handling controller.

The set of virtual markers comprises a first virtual marker corresponding to a load of the vehicle, in particular as unloaded in the surrounding of the vehicle. This allows the load to be visualized for the operator within the representation. The set of commands comprises one or more commands for positioning the first virtual marker within the representation. This allows moving the first virtual marker within the representation, thereby allowing the operator to control the placement of the load within the representation.

The load handling controller is arranged to determine from the position of the first virtual marker in the representation a wanted position for unloading the load relative to the representation of the surrounding of the vehicle. Further, the controller is arranged to provide, based on the wanted position for unloading the load relative to the representation of the surrounding of the vehicle, control instructions for the vehicle for the load handling. This allows efficient human-machine interaction for unloading the load as the first virtual marker can represent the load in the representation thereby allowing the operator to confirm correct positioning for the load before unloading. This correct positioning may be subject to any conditions pertaining to the load and/or to the surrounding. The operator may also visualize the load in the representation of the surrounding before handing control to an autonomous system for moving the vehicle into position for the unloading.

In an embodiment, the set of commands comprises one or more commands for indicating a wanted orientation of the load relative to the representation of the surrounding of the vehicle. The load handling controller can thus be arranged to provide the control instructions based, in addition to the wanted position, on the wanted orientation of the load relative to the representation of the surrounding of the vehicle. This allows further improved control of the load handling.

In a further embodiment, the one or more commands for indicating the wanted orientation of the load relative to the representation of the surrounding of the vehicle comprise a command for rotating the first virtual marker within representation. Alternatively or additionally, the load handling controller can be arranged to determine from the orientation of the first virtual marker in the representation the wanted orientation of the load relative to the representation of the surrounding of the vehicle. The operator may thus have control of the pose of the load for the unloading, for example in two dimensions or even in three dimensions.

In an embodiment, the control instructions are based on a driving trajectory for the vehicle for unloading the load at a target position at the surrounding of the vehicle. The target position at the surrounding of the vehicle may, in particular, correspond to the wanted position relative to the representation of the surrounding of the vehicle.

In a further embodiment, the set of virtual markers comprises a second virtual marker corresponding to the driving trajectory, which allows the driving trajectory to be visualized for the operator. Alternatively or additionally, the set of commands may comprise a confirmation of the driving trajectory, for example from the operator of the load handling controller. The load handling controller may be arranged for initiating the load handling based on the confirmation having been provided.

In an embodiment, the controller is arranged for one or more of the user commands to be received as audible input. In particular, the controller may be arranged to receive the confirmation as the audible input from the operator of the load handling controller. This allows voice control over the load handling controller, which may improve speed and convenience of control under various load handling situations.

In an embodiment, the representation of the surrounding of the vehicle is generated at a view from above the vehicle. This allows improved control of the load handling as the operator is not limited to cabin view, as in conventional systems. The controller may still be arranged for allowing the operator to switch between two or more views of the representation, for example including the view from above the vehicle and/or a view from the vehicle.

In an embodiment, the size of the first virtual marker in the representation, i.e. with respect to the surrounding of the vehicle in representation, corresponds to the size of the load with respect to the surrounding of the vehicle, i.e. the physical size. As the virtual size of the load relative to the surrounding corresponds to the physical size of the load relative to the surrounding, the load handling can be performed with improved precision, also when the surrounding of the vehicle is crowded.

In an embodiment, the load handling controller is arranged to determine whether the wanted position for unloading the load relative to the representation of the surrounding of the vehicle is valid for unloading the load. This may involve whether the first virtual marker in the representation meets a minimum threshold distance to any obstacles in the surrounding of the vehicle and/or whether the driving trajectory can be validly provided for the wanted position and/or the wanted orientation.

In an embodiment, the load handling comprises or consists of moving the vehicle carrying the load for unloading the load at the wanted position.

In an embodiment, the load corresponds to a cargo-carrying object such as an ISO container, a flatrack, a flatbed or a dumpster body.

In an embodiment, the control instructions comprise driving instructions for moving the vehicle for unloading the load at a target position at the surrounding of the vehicle. The target position at the surrounding of the vehicle may correspond to the wanted position relative to the representation of the surrounding of the vehicle.

According to a second aspect, a method for controlling a vehicle with load handling equipment is disclosed. The method comprises receiving sensor input from a system of sensors at the vehicle for monitoring and mapping the surrounding of the vehicle. The system of sensors may comprise at least an image sensor unit and/or a distance mapping sensor unit. The method further comprises generating, based on the sensor input, a representation of the surrounding of the vehicle. The representation may comprise one or more images and/or point cloud maps of the surrounding of the vehicle together with a set of virtual markers for the one or more images and/or point cloud maps of the surrounding of the vehicle to facilitate load handling.

The method further comprises providing the representation of the surrounding of the vehicle for visual illustration to an operator. The method also comprises collecting user commands for the load handling. The user commands may belong to a set of commands available to the operator. The set of virtual markers comprises a first virtual marker corresponding to a load of the vehicle, in particular as unloaded in the surrounding of the vehicle. The set of commands comprises one or more commands for positioning the first virtual marker within the representation.

The method comprises determining from the position of the first virtual marker in the representation a wanted position for unloading the load relative to the representation of the surrounding of the vehicle. Further, the method comprises providing, based on the wanted position for unloading the load relative to the representation of the surrounding of the vehicle, control instructions for the vehicle for the load handling.

According to a third aspect, a computer program product comprises instructions which, when executed by a computer, cause the computer to carry out the method as described above.

It is to be understood that the aspects and embodiments described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding and constitute a part of this specification, illustrate examples and together with the description help to explain the principles of the disclosure. In the drawings:
**Fig. 1** schematically illustrates a system according to an example,
**Fig. 2** illustrates a method according to an example, and
**Fig. 3** illustrates a view for load handling according to an example.

Like references are used to designate equivalent or at least functionally equivalent parts in the accompanying drawings.

### DETAILED DESCRIPTION

The detailed description provided below in connection with the appended drawings is intended as a description of examples and is not intended to represent the only forms in which the example may be constructed or utilized. However, the same or equivalent functions and structures may be accomplished by different examples.

The presently disclosed solutions may be used for load handling. In particular, they may be utilized for any of user-assisted, teleoperated or autonomous load handling.

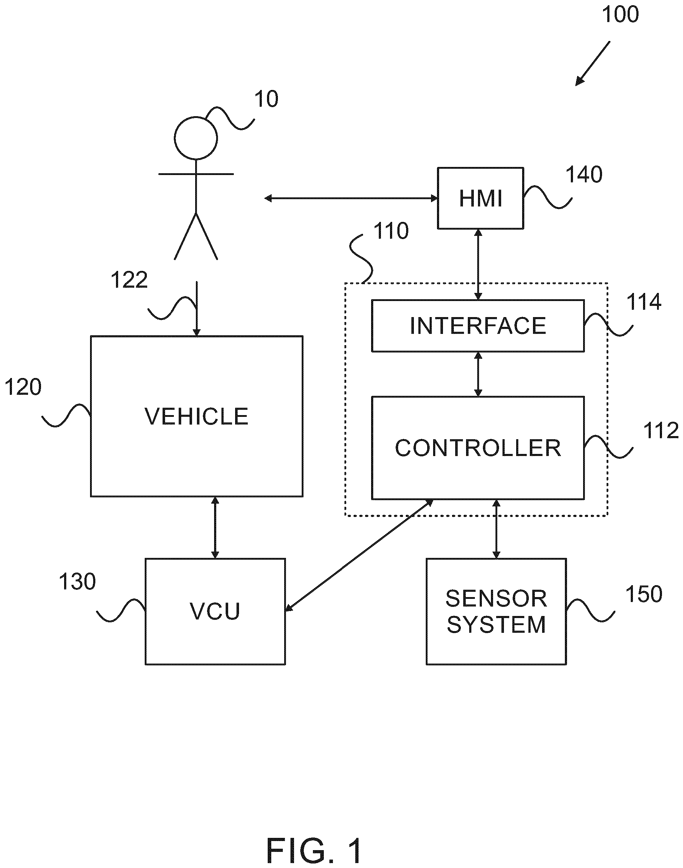

Fig. 1 illustrates a system 100, which comprises at least a load handling controller 112 (herein also "the controller") for a vehicle 120 with load handling equipment. The system 100 may also comprise any or all of the additional components mentioned herein but they may also be provided separately. In particular, the system may comprise a load handling system (LHS) 110 comprising the load handling controller 112, which may also be provided as its own unit i.e. separately from the LHS 110 or the system 100 altogether. The controller may be arranged to perform any of the functions mentioned here for the LHS, or cause them to be performed.

The controller 112, and the LHS 110, can be configured for controlling load handling for the vehicle 120. In particular, the controller 112 may be configured for providing driving instructions for the vehicle for moving to a load and/or to a position for unloading a carried load. In addition, it may be configured for providing actuating instructions for the load handling equipment for moving the load, in particular for unloading the load from the vehicle 120.

For any load handling vehicle such as the vehicle disclosed herein, a route to the load and/or to the position for unloading the carried load may be dependent on the process of loading/unloading and therefore also the driving instructions can become dependent on the process of loading/unloading, for example in terms of orientation and/or position of the vehicle for the loading/unloading. For load handling, the controller 112 may be configured to park the vehicle 120 beside a load and/or an unloading position so that the load may be loaded/unloaded with the load handling equipment. For example, in case of a loader crane the load may be lifted to or from the load bed of the vehicle and, in case of a hook lift the load may be pulled on to or pushed off the load bed of the vehicle with a hook-lift arm. The controller 112 may also be configured for causing stabilizer legs of the vehicle to be activated for the loading/unloading.

The vehicle 120 may be a freely moving vehicle, in which case it can face various navigational challenges from collision avoidance to target localization. It may be arranged for free movement in two-dimensions, e.g. on paved or unpaved ground. The vehicle may be a wheeled vehicle, which can provide freedom of movement over a working surface. The vehicle may be autonomous or semi-autonomous vehicle. For example, the vehicle may be arranged to move autonomously, while manual braking may still be facilitated to allow a user monitoring the operation of the vehicle to slow and/or stop the vehicle. The vehicle may be a by-wired vehicle. In particular, the vehicle may be a truck. The vehicle may be arranged for various applications such as transportation, waste handling or construction.

The vehicle may have a necessary safety compliance for autonomous or semi-autonomous load handling. In that case, an operator(onboard or offboard) may oversee the operation of the vehicle and the load handling equipment. The vehicle may be equipped with a safety-rated braking system (e.g. SAE L3, L4 or L5 autonomy) for the operator to use. Alternatively, the vehicle may be reliable but does not have the necessary safety compliance for autonomous load handling. In such a case, the vehicle may be configured for a supervisor to initiate the operation of the load handling equipment, allowing the supervisor to guide and monitor the load handling. The supervisor can then responsible for exception handling (e.g. SAE L2 - L3 autonomy) .

The vehicle 120 may be equipped with load handling equipment. The load handling equipment may be arranged as an integral part of the vehicle. The load handling equipment may be arranged to facilitate loading and/or unloading of the vehicle, i.e. loading and/or unloading the load, which in the case of unloading is the carried load. For this purpose, the load handling equipment may comprise one or more movable load handling actuators. The load handling equipment may comprise or consist of any of the following, for example: a hook lift, a skip loader, a crane, a roll off truck hoist, a tail lift and any other movable arm for the load handling. The crane may be a loader crane, a truck-loaded crane, a forestry crane, a recycling crane or any vehicle-mounted crane. In general, the load handling equipment may be a vehicle-mounted piece of equipment, such as a vehicle-mounted crane, in contrast to for example mobile cranes, which have their own chassis. The load handling equipment may be separable from the vehicle.

The load may correspond to a cargo-carrying object. It may be a container, such as an ISO container, an intermodal container or a flatrack container. However, in general it may be any structured load such as a flatbed, a flatrack, a bin, a recycling container, a package of building material, a dumpster body or any other type of goods. The load may comprise a grappling interface for the working unit(s), such as a hook handle or bar, for loading and/or unloading the load to the vehicle.

The system 100 may comprise a vehicle control unit (VCU) 130, which may be provided as a part of the LHS 110, or the controller 112 thereof, or as a vehicle control system (VCS) that is separate from the LHS 110. For example, the VCU may be integrated to the vehicle 120. The VCU may be configured for directly controlling operations of the vehicle, whereas the controller 112 may be configured for higher-level planning for controlling the vehicle. The VCU 130 may be configured for providing actuator commands to the vehicle 120 and/or for receiving intrinsic measurement data from the vehicle 120. The VCU 130 may be configured to provide operational information such as intrinsic estimates or vehicle status to the controller 112 and/or for receiving control configurations such as driving trajectories from the controller 112. Vice versa, the controller 112 may be configured for receiving the operational information from the VCU 130 and/or providing the control configurations to the VCU 130.

The solutions disclosed herein may be provided as vehicle agnostic solutions, allowing the solutions to be utilized with no special requirements for the vehicle 120, for example in pre-existing vehicles as a retrofit. This can be achieved by the controller 112 being configured to interact with different types of VCUs 130.

The system 100 may also comprise one or more human-machine-interface (HMI) devices 140 (herein also "the HMI devices" for allowing an operator 10 of the vehicle 120, in particular the operator being a human operator, to interact with the LHS 110, or the controller 112. The operator of the LHS and/or the controller can thus be the operator of the vehicle. Accordingly, "the operator" may herein refer to the operator of the controller but additionally also to the operator of the LHS and/or the vehicle. The HMI may comprise one or more user interfaces for allowing the operator to input information for the controller and/or receive information from the controller. The user interface may comprise a display, such as a touch screen, an augmented reality device, virtual reality googles or a regular display. The HMI devices may be arranged at the vehicle and/or separate from the vehicle, in the latter case allowing the operator to remotely control the vehicle with the HMI devices, such as with a remote control unit, e.g. for a loader crane. The HMI devices may comprise cloud-connection devices, for example, for communicating with the controller 112. The HMI devices may be arranged to provide a distributed user interface with some components integrated at the vehicle and others provided for remote control of the vehicle. The system 100 may also comprise an emergency brake 122 for stopping the vehicle 120 and this emergency brake may be arranged to bypass the LHS 110, or the controller 112, thereby reducing delay for stopping the vehicle.

The system 100 may comprise a system of sensors 150 (herein also "the sensor system"), which may be arranged at the vehicle. The sensor system may be arranged for monitoring and mapping the surrounding of the vehicle 120. For this purpose, the sensor system may comprise at least an image sensor unit and/or a distance mapping sensor unit. The image sensor unit may comprise one or more cameras, which may be arranged for video imaging and/or color imaging, e.g. RGB cameras. The distance mapping sensor unit may comprise, for example, one or more optical sensors such as LIDARs and/or time-of-flight cameras. Any other distance mapping sensors such as ultrasonic sensors or radar-based sensors may also be used.

The system 100 may comprise an interface 114, which may be arranged as part of the LHS 110 but also separate from it. The interface is a communication interface between the controller 112 and the HMI devices 140 and it may comprise a wired interface, such as one or more data transmission cables, and/or a wireless interface, such as a radio frequency communication interface. Similar or corresponding interfaces may also be between other parts of the system 100, for example between the VCU 130 and the controller 112 and/or between the sensor system 150 and the controller. However, these need not be described here in detail.

The controller 112 is a load handling controller, such as an autonomous load handling system (ALHS). The controller 112 may be a centralized controller or a distributed controller. It may comprise one or more control units, which may be positioned together or separate. The controller 112, fully or in part, may be arranged to be mounted to the vehicle 120 for operation. For example, it may be included as part of a working equipment assembly comprising the load handling equipment and arranged to be mounted to the vehicle for operation. Alternatively or additionally, the controller may be arranged to operate with remote connection to the vehicle 120, for example through the VCU 130. This allows remote control of the vehicle. The vehicle can also comprise a receiver and/or a transmitter-receiver for communicating with the controller. In general, the vehicle may comprise a receiver and/or a transmitter (both options including the possibility also for a transmitter-receiver) coupled to the controller for providing instructions to the controller and/or facilitating transmission of information, such as status information, from the controller.

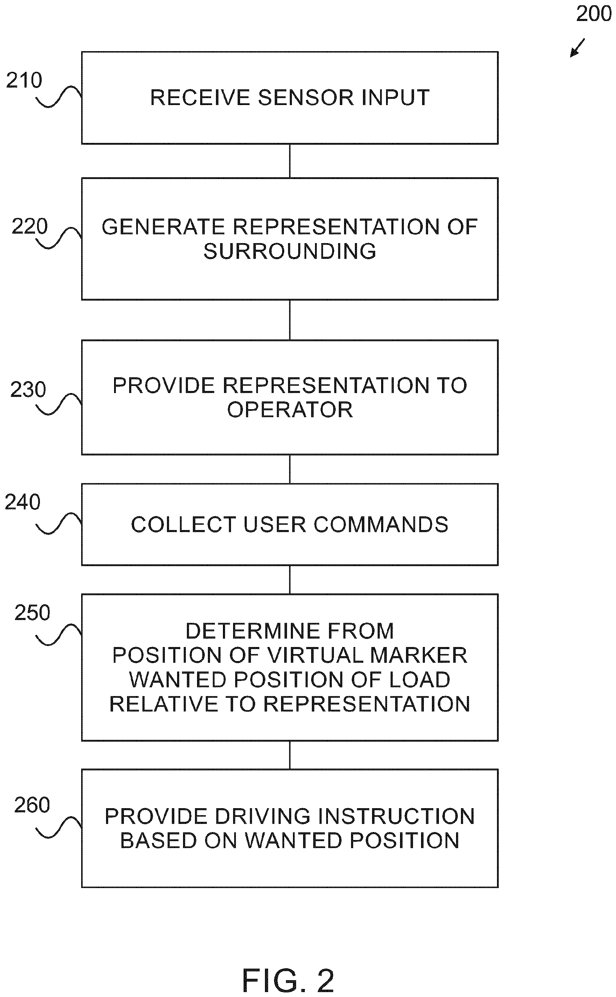

The controller 112 may comprise one or more processors (herein also "the processors") and one or more memories. The memories may comprise instructions which, when run by the processors cause any of the acts described herein for the controller and/or the LHS to be performed. In particular, these acts may comprise any or all of the acts described below and the controller may be arranged accordingly. Similarly, a computer program product may comprise any or all of the acts described herein, in particular with reference to Fig. 2.

Fig. 2 illustrates a method 200, which may be used for controlling the vehicle 120 with the load handling equipment as described herein. The method, or any of its parts in any combination, may be performed by the controller 112 and/or the LHS 110. The method 200 comprises several parts which may be performed independently from each other. The parts may be performed in the indicated order or in any other applicable order including concurrently.

The method 200 comprises receiving 210 sensor input from the system of sensors 150 at the vehicle 120 for monitoring and mapping the surrounding of the vehicle. The sensor input may be received repeatedly in time for continuously monitoring the surrounding of the vehicle. Through the sensor input, in particular from the distance mapping sensor input, point clouds may be provided, as raw data point clouds and/or as conditioned point clouds. The point clouds may be provided in accordance with any of the methods available to a person skilled in the art and they are to be contrasted with images, which are composed in markedly distinct manner, e.g. from pixels. Images can also be provided through the sensor input, in particular from the image sensor unit. The point clouds may be produced by one or more scanners, in contrast to images which may be produced with cameras. The sensor input from the image sensor unit may be convertable to a quantized indication, such as a pixelized view, of the surrounding of the vehicle. The system of sensors and/or the controller may be configured for providing machine-readable data matrices for automated identification of a target such as the load and/or human-readable images for interacting with an on-board/offboard human operator.

The sensor input is used for generating 220 a representation of the surrounding of the vehicle. The representation may be generated solely based on the sensor input or based on the sensor input and additional data such as additional data of the surrounding, which additional data may be obtained earlier by the controller 112 and/or from one or more external sources. The representation may be repeatedly updated, in particular for continuous monitoring of the surrounding. This can be done in particular when the vehicle is moving but also when it is stationary as the surrounding may change. The representation can be a three-dimensional representation of the surrounding. It may comprise one or more images, such as color images, and/or point cloud maps of the surrounding of the vehicle. The representation may be provided dynamically so that it can be changed when the vehicle moves and/or the surrounding of the vehicle changes. The representation may also be provided with multiple views such as a camera view and a point cloud view and the operator may be provided a choice for switching between the multiple views. Alternatively or additionally, two views may be provided simultaneously, for example so that one view such as the point cloud view may be embedded into another view such as the camera view. The solutions thus allow providing a virtual user interface for controlling the load handling with one or more virtual views to the surrounding of the vehicle.

The virtual user interface also allows the representation of the surrounding of the vehicle to be generated at a view from above the vehicle. The operator may still be provided with a possibility to switch between two or more views of the representation, for example including the view from above the vehicle and/or a view from the vehicle.

The representation may be provided together with a set of virtual markers for the one or more images and/or point cloud maps of the surrounding of the vehicle to facilitate load handling. The set of virtual markers may be provided as part of the representation, e.g. as embedded thereto. They may be positioned into the surrounding of the vehicle to represent objects and/or instructions in the surrounding of the vehicle. The set of virtual markers comprises a first virtual marker 320 corresponding to the load of the vehicle. In particular, this may be used as a virtual load, which may be used to indicate a drop-off position for the load. The first virtual marker can thus represent the load as unloaded in the surrounding of the vehicle.

The representation may be generated by the controller 112 itself based on the sensor input. It may also be generated based on the sensor input and a pre-generated map received by the controller. The controller 112 may be arranged to store the representation into the one or more memories. The controller 112 may be arranged to activate a pre-generated representation when the vehicle arrives (e.g. re-arrives) at the surrounding described by the pre-generated representation.

The representation describes the surrounding of the vehicle 120. The surrounding may comprise one or more landmarks, such as obstacles. These may include other vehicles, buildings, containers etc. The surrounding may also comprise the load, in particular as the first virtual marker. The representation may be a two- or three-dimensional map. It may have a coordinate system, which may be fixed. This allows providing a frame of reference, which may be stationary. The controller 112 may be arranged to facilitate a graphical illustration of the representation, for example through the interface 114, and the HMI devices 140 in particular.

The method 200 may comprise causing the representation of the surrounding of the vehicle 120 to be provided 230 to the HMI devices 140 for visual illustration of the surrounding of the vehicle to the operator 10. This representation may be provided by the controller 112, in particular by causing the representation to be transmitted via the interface 114 to the HMI devices 140. The representation may be illustrated to the operator through a display, such as the touch screen, the augmented reality device, the virtual reality googles or the regular display.

Similarly, user commands are collected 240 from the HMI devices 140 for load handling. This may also be done through the interface 114, in particular so that the controller 112 collects the user commands via the interface 114 from the HMI devices 140. This may involve collecting at least some of the user commands through the touch screen and/or through one or more physical actuators such as a button, a keyboard or a joystick. The user commands may be collected through the same device of the HMI devices, such as the touch screen, used to illustrate the representation to the operator but also through a different device. Additionally or alternatively, one or more of the user commands may be received as audible input and/or as visual input. The operator can thus control the load handling with voice control and/or gesture control, in addition or as an alternative to a physical contact to the HMI devices.

The user commands mentioned above may belong to a set of commands available to the operator 10. The set of commands comprises one or more commands for positioning the first virtual marker within the representation. This allows moving the first virtual marker within the representation, thereby allowing the operator to control the placement of the load within the representation but also monitoring the appearance of the load, such as the size and/or orientation of the load, in the representation. This allows the operator to confirm that the load can be validly dropped off at a wanted position before the vehicle is moved into position for the unloading. The size (and/or shape) of the first virtual marker in the representation may correspond to the size (and/or shape) of the load with respect to the surrounding of the vehicle allowing the first virtual marker to represent the space needed for the load also in the representation, with respect to the surrounding of the vehicle. The first virtual marker may also comprise or consist of a bounding box for the load in the representation, for example a rectangular bounding box. This allows avoiding overlap for the first virtual marker in the representation, in particular with respect to any obstacles, in a simple and straightforward manner. The one or more commands for positioning the first virtual marker may comprise or consist of one or more translation commands for the first virtual marker, for example in four separate directions, e.g. as two pairs of opposite directions.

The method comprises determining 250 from the position of the first virtual marker in the representation the wanted position for unloading the load. The wanted position may correspond to a position of the vehicle for the unloading or the position of the load after the unloading. Moving the vehicle to the wanted position may thus correspond to either or both cases. The position of the vehicle for unloading the load to a position corresponding to the first virtual marker in the representation, which may correspond to the position of the load after the unloading, may depend on the type of the load handling equipment that the vehicle is equipped with for the load handling. As an illustrative example, a hook lift typically unloads loads from the rear of the vehicle while a loader crane may unload the load from the side of the vehicle.

The set of commands may also comprise one or more commands for indicating a wanted orientation of the load relative to the representation of the surrounding of the vehicle. Said one or more commands may comprise or consist of one or more commands for rotating the first virtual marker within representation. The wanted orientation of the load relative to the representation of the surrounding of the vehicle may be determined from the orientation of the first virtual marker in the representation. The wanted orientation may correspond to the orientation of the load after the unloading. The wanted position and/or the wanted orientation can be determined relative to the representation of the surrounding of the vehicle.

The load handling as described herein may comprise or consist of moving the vehicle carrying the load for unloading the load at the wanted position. Alternatively or additionally, the load handling may comprise or consist of actuating the load handling equipment for moving the load, in particular for unloading the load from the vehicle 120 at the wanted position and, optionally, into the wanted orientation.

The set of commands may comprise a command for selecting the wanted position and/or confirming the wanted position, for example by confirming a driving trajectory to a target position, which may correspond to the wanted position. The set of commands may comprise a command for entering into an operation state for the unloading, i.e. into a drop-off mode, in which the controller may provide the first virtual marker for positioning. The set of commands may also comprise a command for stopping the vehicle 120 and/or a command for changing control mode of the vehicle to autonomous operation from human operation. The command for confirmation and/or the command for stopping may be received as audible input from the operator, and the controller may be arranged accordingly.

The method 200 may comprise determining a driving trajectory for moving the vehicle 120 from the current position of the vehicle for unloading the load at the target position. The driving trajectory may be determined all the way to the target position. The driving trajectory may be determined in a space of spatial coordinates, such as x-y or x-y-z coordinates, in which case the space may comprise or consist of a two-dimensional coordinate space or a three-dimensional coordinate space. Alternatively or additionally, it may be determined in some other space for moving the vehicle such as an actuator space, i.e. a space of control commands for actuators for moving the vehicle. In this case, the dimensionality of the space may correspond to the number of the degrees of freedom for the actuators. The driving trajectory may be expressed in vector or matrix form. The driving trajectory is determined based, at least, on the sensor input and the wanted position. For example, the driving trajectory may be determined based on the representation, which is generated based on the sensor input. The driving trajectory may be determined as the shortest trajectory from the current position of the vehicle for unloading the load at the target position with optional conditions. The optional conditions may comprise a requirement for the pose of the vehicle and/or the load handling equipment for the unloading at the target position. The optional conditions may also comprise a requirement to evade an obstacle, such as an object or a person, identified in the sensor input.

The vehicle may be a car-like vehicle with steering, such as a truck with a hook lift, which has non-holonomic dynamics. For such dynamics, the vehicle cannot be commanded to create a lateral motion without steering and having velocity in the longitudinal direction. Therefore, the driving trajectory may typically be determined so that it starts from the current position of the vehicle and ends at a position for the unloading with a curve that allows the vehicle to smoothly perform the unloading, e.g. by freely utilizing the load handling equipment, such as the hook lift, for positioning the load into the wanted orientation, while avoiding any possible obstacles.

The representation of the surrounding of the vehicle 120 may be provided to the HMI devices 140 together with a representation of the driving trajectory. The representation of the driving trajectory may be illustrated with a line or a set of symbols defining a line. This allows providing to the operator 10 a graphical illustration of the representation, which may comprise an illustration of the driving trajectory within an illustration of the surrounding of the vehicle. The illustration of the driving trajectory may extend along the whole length or a partial length of the driving trajectory.

It may be determined whether the wanted position for unloading the load relative to the representation of the surrounding of the vehicle is valid for unloading the load. This may be performed automatically, in particular by the controller 112. Optical recognition means may be utilized for this purpose. The confirmation may be performed based on the wanted position but also on the wanted orientation and/or properties of the load, such as the size and/or the shape of the load. The confirmation may involve determining whether the vehicle is positioned validly for the unloading and/or whether the load is positioned validly after the unloading. The confirmation may involve determining whether the first virtual marker in the representation, representing the load, meets one or more conditions in the representation such as a minimum threshold distance to any obstacles in the surrounding of the vehicle and/or whether the driving trajectory can be validly provided for the wanted position and/or the wanted orientation. The control instructions may be provided to the vehicle for the load handling if the wanted position and/or the wanted orientation is valid, in particular if the driving trajectory is valid. The controller may be arranged accordingly. For example, the driving trajectory may be visualized to the operator but with an indication that it (or the wanted position and/or the wanted orientation) is invalid. The operator may then be requested to reselect the wanted position and/or the wanted orientation.

Any or all of the commands may be requested as a response to a prompt from the controller. The set of commands may comprise one or more user interface commands such as a command for zooming a view for the representation and/or switching between different views for the representation, for example including the view from above the vehicle and/or the view from the vehicle.

Further, the method 200 comprises providing 260 control instructions for the vehicle for the load handling, in particular for the unloading. These can be provided based on the wanted position and/or the wanted orientation of the load relative to the representation of the surrounding of the vehicle. The control instructions may be generated by the controller 112. The controller may be arranged to cause the control instructions to be transmitted for controlling the vehicle, in particular to the VCU 130. The control instructions may be transmitted for autonomous operation of the vehicle, in particular for autonomous unloading of the load, based on or in response to the wanted position and/or the wanted orientation having been determined.

The control instructions may comprise driving instructions for moving the vehicle and/or actuation instructions for actuating the load handling equipment. The control instructions may be instructions for autonomous operation of the vehicle. In particular, the driving instructions may be for moving the vehicle for unloading the load at a target position at the surrounding of the vehicle. This target position at the surrounding of the vehicle may correspond to the wanted position relative to the representation of the surrounding of the vehicle.

The control instructions may be based on the driving trajectory for the vehicle for unloading the load at the target position at the surrounding of the vehicle. The target position at the surrounding of the vehicle may correspond to the wanted position relative to the representation of the surrounding of the vehicle. The driving instructions can thus be provided based on the driving trajectory but they do not necessarily need to correspond to the full length of the driving trajectory from the current position of the vehicle to the position for unloading the vehicle, which may be represented by the wanted position. While a single set of driving instructions may extend to the position for unloading the vehicle at the end of the driving trajectory, providing the driving instructions in shorter increments allows conserving both computational and data transmission resources. The driving instructions may may be provided to extend beyond a threshold length which allows the vehicle to be slowed down to a halt within the projected trajectory in response to a sudden stop command, the projected trajectory here indicating the spatial trajectory corresponding to said driving instructions. The threshold length may correspond to a spatial length and/or temporal length for vehicle movement with said driving instructions. For example, if the vehicle is instructed to drive with a speed from which it takes 4 seconds to stop to a halt, the threshold length corresponds to driving instructions for the next 4 seconds of operation so that if there are only 4 seconds of driving instructions left and now further driving instructions have been received, the vehicle is directed to stop rather than continue with until the end of said driving instructions. This adds to the safety and comfort of the operator, as the upcoming maneuvers are intuitive and predictable seconds upfront from the screen.

The set of virtual markers may comprise a second virtual marker 350 corresponding to the driving trajectory. The driving trajectory can thus be visualized for the operator. The second virtual marker may comprise or consist of one or more path overlays for the driving trajectory.

The second virtual marker may extend from the current position of the vehicle in the representation and/or to the wanted position in the representation. It may extend all the way from the current position of the vehicle to the wanted position but this is not necessary. The second virtual marker may indicate the trajectory from the current position of the vehicle to the wanted position, as a continuous indication but alternatively as a discontinuous indication. The second virtual marker may comprise or consist of one or more lines corresponding to the driving trajectory. In some embodiments, the second virtual marker is of length that is at least half the distance between the current position of the vehicle and the wanted position.

The second virtual marker may be visualized in the representation while the operator is selecting the wanted position and/or wanted orientation, allowing the operator to control the wanted position and/or wanted orientation based on a visualization of the resulting driving trajectory. Alternatively or additionally, the second virtual marker may be visualized in the representation based on the wanted position and/or wanted orientation having been confirmed.

The set of commands may comprise a confirmation of the driving trajectory, for example from the operator and/or from a supervisory system. The controller may be arranged for initiating the load handling based on the confirmation having been provided.

The disclosed solutions may be utilized for a user interface for human-machine or human-robot interaction. They may be utilized for driver-assisted automated and autonomous operation of the vehicle and/or the load handling equipment, e.g for pick-and-place tasks.

The first virtual marker may be provided as a virtual-reality object such as a virtual drop-off load. The second virtual marker may be provided as an augmented-reality object such as a path overlay. The first virtual marker and/or the second virtual marker may be overlayed on the representation, in particular on an image visualizing the representation. The first virtual marker and/or the second virtual marker may be visualized on the HMI devices 140, e.g. on a windscreen of the vehicle and/or on a remote device. The HMI devices 140 may comprise virtual-reality glasses and/or one or more glasses-free mixed reality devices.

The first virtual marker may be provided as a virtual load, in particular as a customizable virtual drop-off load. The set of commands may comprise one or more commands for positioning the virtual load within the representation to indicate the wanted position and/or the wanted orientation for unloading the load.

The virtual load, such as a virtual container, may have dimensions corresponding to those of the load carried by the vehicle. The information about the dimensions may be provided, to the controller, automatically and/or manually. For example, the system of sensors may comprise one or more sensors, such as perception sensors, for providing measurements for determining the dimensions of the load. Alternatively or additionally, the operator may be provided with a set of alternatives for the type of the load, based on which the dimensions are determined as they may be provided as predetermined information for each type. The vehicle may also be for handling unisized loads, in which case the size of the first virtual marker may be preset to correspond to the size of the unisized loads. The set of commands may comprise one or more commands for changing the size of the first virtual marker or the size may be fixed.

The pose, i.e. the wanted position and/or the wanted orientation, of the first virtual marker may be changed, for example, by dragging the first virtual marker by touch screen input or by mouse input and/or by using a virtual control interface such as and actual joystick and/or a virtual joystick.

Any or all of the user commands may be received through speech recognition, e.g. by the controller being configured for speech recognition. The set of commands may comprise any of the following: a start command, a stop command and a confirmation command. The vehicle may thus be subjected to hands-free control. The controller may provide audio output such as warnings, for example when a critical safety event occurs. This may include an obstacle being identified in the surrounding of the vehicle and/or a problem in the internal state of the vehicle.

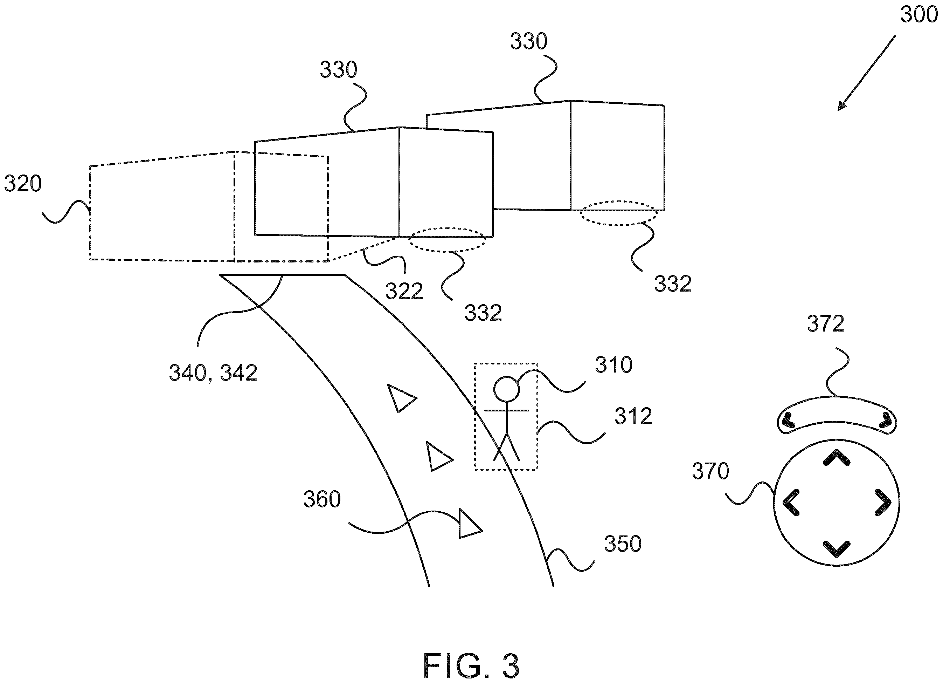

Fig. 3 shows an example of a view 300 for the load handling as described herein. The view can be provided as the graphical illustration of the representation as described above. The controller may be arranged for causing the view to be displayed for the operator for selecting the wanted position and/or the wanted orientation.

The view illustrates how the obstacles, such as a person 310 and/or surrounding loads 330, and the first virtual marker 320 can be visualized based on the representation. For the obstacles, the controller may automatically determine designations 312, 332, in the representation and/or corresponding virtual markers, for example as bounding boxes. The view also illustrates how the minimum threshold distance 322 may be determined and/or visualized. The condition for meeting the minimum threshold distance may be determined based on the distance between the first virtual marker and the bounding box of any of the obstacles 312, 332 in the surrounding.

The wanted position 340 may be illustrated, for example simply as an end 342 of the driving trajectory. The driving trajectory may be illustrated by the second virtual marker 350.

The example further illustrates how the driving instructions 360 may also be illustrated based on the representation, for example by a third virtual marker. Accordingly, in the illustrated example the wanted position 340 may already be confirmed so that the driving instructions 360 can be provided.

The user interface may also comprise one or more controls for the user commands, e.g. for the one or more commands for positioning the first virtual marker. Illustrated is an example of a virtual joystick comprising the translation commands 370 and the rotation commands 372.

An example of the operation of the system 100 is as follows. The operator 10 may provide a drop-off location, as the wanted position, through the HMI devices 140. The controller 112 may apply optical recognition means for detecting whether the intended location is suited for dropping off the load in its current view. The operator may select an empty space in the representation of the surrounding of the vehicle, for example from a touch screen by placing the virtual load to a desired pose. The controller may then visualize the driving trajectory, e.g. as a global path and/or as a corridor from the vehicle to the empty space. A confirmation from the operator may be obtained (e.g. by the operator shifting a gear of the vehicle to reverse and pressing the throttle pedal once and/or clicking on the HMI devices). This may commence an automated driving operation for the vehicle. The controller may assume control of the vehicle, allowing it to drive automatically to a pose suitable for dropping off the load. Any misalignment from the view of the desired drop-off space may be minimized by means of lateral and longitudinal control. After the vehicle has been driven to the wanted position, the automated driving may end and the vehicle may reach a standstill state. This may be indicated by the controller to the operator. The controller and/or the operator may engage the load handling equipment, such as the hook lift, to drop off the load.

The controller as described above may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magneto-optical disk, R_AM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

All or a portion of the embodiments can be implemented using one or more general purpose processors, microprocessors, digital signal processors, micro-controllers, and the like, programmed according to the teachings of the embodiments, as will be appreciated by those skilled in the computer and/or software art(s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

Although the invention has been described in conjunction with a certain type of apparatus and/or method, it should be understood that the invention is not limited to any certain type of apparatus and/or method. While the present inventions have been described in connection with a number of examples, embodiments and implementations, the present inventions are not so limited, but rather cover various modifications, and equivalent arrangements, when falling within the purview of the claims. Although various examples have been described above with a certain degree of particularity, or with reference to one or more individual embodiments, those skilled in the art could make numerous alterations to the disclosed examples without departing from the scope of this specification.

## Claims

1. A load handling controller for a vehicle with load handling equipment, the load handling controller being arranged to:
- receive sensor input from a system of sensors at the vehicle, comprising at least an image sensor unit and a distance mapping sensor unit, for monitoring and mapping the surrounding of the vehicle;
- generate, based on the sensor input, a representation of the surrounding of the vehicle, the representation comprising one or more images and/or point cloud maps of the surrounding of the vehicle together with a set of virtual markers for the one or more images and/or point cloud maps of the surrounding of the vehicle to facilitate load handling;
- provide the representation of the surrounding of the vehicle for visual illustration to an operator of the load handling controller on one or more human-machine interface devices; and
- collect user commands for the load handling from the one or more human-machine interface devices, wherein the user commands belong to a set of commands available to the operator of the load handling controller;
wherein the set of virtual markers comprises a first virtual marker corresponding to a load of the vehicle and that the set of commands comprises one or more commands for positioning the first virtual marker within the representation; and
the load handling controller is arranged to determine from the position of the first virtual marker in the representation a wanted position for unloading the load relative to the representation of the surrounding of the vehicle and provide, based on the wanted position for unloading the load relative to the representation of the surrounding of the vehicle, control instructions for the vehicle for the load handling.

2. The load handling controller according to claim 1, wherein the set of commands comprises one or more commands for indicating a wanted orientation of the load relative to the representation of the surrounding of the vehicle and the load handling controller is arranged to provide the control instructions based on the wanted orientation of the load relative to the representation of the surrounding of the vehicle.

3. The load handling controller according to claim 2, wherein the one or more commands for indicating the wanted orientation of the load relative to the representation of the surrounding of the vehicle comprise a command for rotating the first virtual marker within representation and the load handling controller is arranged to determine from the orientation of the first virtual marker in the representation the wanted orientation of the load relative to the representation of the surrounding of the vehicle.

4. The load handling controller according to any preceding claim, wherein the control instructions are based on a driving trajectory for the vehicle for unloading the load at a target position at the surrounding of the vehicle, the target position at the surrounding of the vehicle corresponding to the wanted position relative to the representation of the surrounding of the vehicle.

5. The load handling controller according to claim 4, wherein the set of virtual markers comprises a second virtual marker corresponding to the driving trajectory, the set of commands comprises a confirmation of the driving trajectory and the load handling controller is arranged for initiating the load handling based on the confirmation having been provided.

6. The load handling controller according to any preceding claim, wherein the controller is arranged for one or more of the user commands to be received as audible input.

7. The load handling controller according to any preceding claim, wherein the representation of the surrounding of the vehicle is generated at a view from above the vehicle.

8. The load handling controller according to any preceding claim, wherein the size of the first virtual marker in the representation corresponds to the size of the load with respect to the surrounding of the vehicle.

9. The load handling controller according to any preceding claim, arranged to determine whether the wanted position for unloading the load relative to the representation of the surrounding of the vehicle is valid for unloading the load and providing the control instructions to the vehicle for the load handling if the wanted position is valid.

10. The load handling controller according to any preceding claim, wherein the load handling comprises moving the vehicle carrying the load for unloading the load at the wanted position.

11. The load handling controller according to any preceding claim, wherein the load corresponds to a cargo-carrying object such as an ISO container, a flatrack, a flatbed or a dumpster body.

12. The load handling controller according to any preceding claim, wherein the control instructions comprise driving instructions for moving the vehicle for unloading the load at a target position at the surrounding of the vehicle, the target position at the surrounding of the vehicle corresponding to the wanted position relative to the representation of the surrounding of the vehicle.

13. A method for controlling a vehicle with load handling equipment, the method comprising:
- receiving sensor input from a system of sensors at the vehicle, comprising at least an image sensor unit and a distance mapping sensor unit, for monitoring and mapping the surrounding of the vehicle;
- generating, based on the sensor input, a representation of the surrounding of the vehicle, the representation comprising one or more images and/or point cloud maps of the surrounding of the vehicle together with a set of virtual markers for the one or more images and/or point cloud maps of the surrounding of the vehicle to facilitate load handling;
- providing the representation of the surrounding of the vehicle for visual illustration to an operator; and
- collect user commands for the load handling, wherein the user commands belong to a set of commands available to the operator;
wherein the set of virtual markers comprises a first virtual marker corresponding to a load of the vehicle and that the set of commands comprises one or more commands for positioning the first virtual marker within the representation; and
the method comprises determining from the position of the first virtual marker in the representation a wanted position for unloading the load relative to the representation of the surrounding of the vehicle and providing, based on the wanted position for unloading the load relative to the representation of the surrounding of the vehicle, control instructions for the vehicle for the load handling.

14. A computer program product comprising instructions which, when executed by a computer, cause the computer to carry out the method of claim 13.
